# EUROPÄISCHE PATENTSCHRIFT

(11) **EP 2 743 367 B1**
(45) Veröffentlichungstag und Bekanntmachung des Hinweises auf die Patenterteilung: **16.09.2015**
(21) Anmeldenummer: 12197465.3
(22) Anmeldetag: 17.12.2012
(51) Int. Cl.: C23C 2/00, C23C 4/08, C23C 4/18, C23C 26/00

(54) **Tauchbadrolle und Verfahren zum Herstellen einer Tauchbadrolle**
Submersible bath roller and method for producing same
Rouleau de bain submersible et procédé de fabrication d'un rouleau de bain submersible

(43) Veröffentlichungstag der Anmeldung: 18.06.2014
(73) Patentinhaber: Sulzer Metco Coatings GmbH, 38239 Salzgitter (DE)
(72) Erfinder: JANSEN, Franz, Dr., 52499 Baesweiler (DE)
(74) Vertreter: Intellectual Property Services GmbH

(56) Entgegenhaltungen:
- EP-A1- 0 687 746
- EP-A1- 2 145 845
- DE-C1- 3 437 983

## Beschreibung

Die Erfindung betrifft eine Tauchbadrolle für ein Tauchbad mit flüssigem Metall sowie ein Verfahren zur Herstellung einer Tauchbadrolle gemäss dem Oberbegriff des unabhängigen Anspruchs der jeweiligen Kategorie.

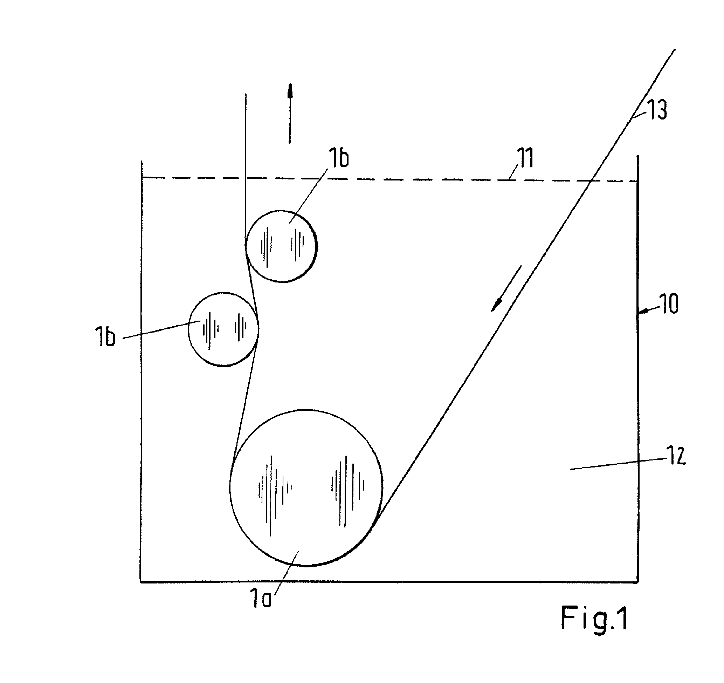

Zur metallischen Beschichtung von bandförmigen Materialien, beispielsweise Blechen oder sonstigen Werkstücken in der Stahlindustrie, ist es bekannt, diese durch ein Tauchbad mit flüssigem Metall zu ziehen, um so die Beschichtung zu erreichen. Beispiele hierfür sind die Aluminisierung oder die Verzinkung von Blechen, die auch als Feueraluminieren bzw. Feuerverzinken bezeichnet werden. Hierbei wird das zu beschichtende Blech (siehe Fig. 1), welches in Form eines Bandes vorliegt durch ein Gefäss gezogen, in welchem das gewünschte Material - also beispielsweise Aluminium oder Zink, in geschmolzener Form enthalten ist. Zur Führung des Bandes sind typischerweise mehrere Rollen vorgesehen, die vollständig in dem geschmolzenen Metall untergetaucht sind. Man unterscheidet üblicherweise zwischen den Bodenrollen (pot rolls), mit welchen das Band umgelenkt wird, und den Stabilisatorrollen bzw. Korrekturrollen (support rolls and corrector rolls), welche den Bandlauf stabilisieren.

Im Folgenden werden sowohl die Stabilisator- und Korrekturrollen als auch die Bodenrollen mit dem Oberbegriff Tauchbadrollen zusammengefasst.

Die Lagerung der Tauchbadrollen beim Feueraluminieren oder Verzinken stellt aufgrund der Aggressivität der flüssigen Metalle ein grosses Problem dar. Beim Feueraluminieren greift insbesondere das Aluminium oder die Aluminium-Silizium-Schmelze die mechanischen Lager der Tauchbadrollen an.

Häufig sind die Lagerzapfen, die als massive Zapfen ausgestaltet sein können oder als Kern mit einer darauf angeordneten Buchse, aus Stelliten gefertigt. Die Gegenlaufpartner der Lagerzapfen sind üblicherweise auch aus Stelliten oder aus Keramik hergestellt.

Aufgrund des tribokorrosiven Angriffs der flüssigen Metallschmelze, also die Kombination des korrosiven Angriffs mit der Reibwirkung zwischen den Gegenlaufpartnern der Lagerung, unterliegen die Lagerzapfen einem enorm hohen Verschleiss. Bei der kontinuierlichen Bandaluminisierung haben die Lagerzapfen bzw. die Buchsen lediglich eine Standzeit von maximal 3-5 Tagen. Danach sind so starke metallurgische Auflösungen und reibungsbedingte Degradationen der Lagerzapfen vorhanden, dass die Tauchbadrollen ausgetauscht werden müssen.

Aus der EP-A-2 145 845 ist eine Tauchbadrolle bekannt mit einem Rollenkörper, der sich entlang einer Längsachse erstreckt, sowie mit im Wesentlichen zylindrischen Lagerzapfen zum Zusammenwirken mit Lagerbuchsen zwecks Lagerung der Tauchbadrolle, wobei jeder Lagerzapfen mindestens eine Nut aufweist, die sich in Umfangsrichtung über den gesamten Umfang des Lagerzapfens erstreckt, und die mittels einer durch thermisches Spritzen erzeugten Schutzschicht aufgefüllt ist.

Auch wenn sich solche Tauchbadrollen in der Praxis sehr gut bewährt haben, so besteht dennoch das Bedürfnis, die Korrosionsbeständigkeit und die Verschleissfestigkeit solcher Tauchbadrollen noch zu verbessern

Ausgehend von diesem Stand der Technik ist es daher eine Aufgabe der Erfindung, eine Tauchbadrolle vorzuschlagen, mit der sich in metallischen Tauchbädern, speziell Aluminium- und Zinkbädern, höhere Standzeiten erzielen lassen. Ferner ist es eine Aufgabe der Erfindung, ein entsprechendes Verfahren zur Herstellung solcher Tauchbadrollen vorzuschlagen.

Die diese Aufgabe lösenden Gegenstände der Erfindung sind durch die unabhängigen Ansprüche der jeweiligen Kategorie gekennzeichnet.

Erfindungsgemäss wird also eine Tauchbadrolle für ein Tauchbad mit flüssigem Metall vorgeschlagen mit einem Rollenkörper, der sich entlang einer Längsachse erstreckt, sowie mit einem im Wesentlichen zylindrischen Lagerzapfen zum Zusammenwirken mit Lagerbuchsen zwecks Lagerung der Tauchbadrolle, wobei jeder Lagerzapfen eine Schutzschicht aufweist, und wobei die Schutzschicht eine Wolfram- oder eine Molybdänbasisschicht ist, die einen Hartstoff enthält und mittels eines Laserverfahrens generiert ist.

Mittels der Laserverfahren lässt sich mit den Basiswerkstoffen Wolfram oder Molybdan eine Gussstruktur oder zumindest eine gussähnliche Struktur erzeugen, in welche die Hartstoffe besonders gut eingebunden werden, woraus eine bessere Verschleissfestigkeit und höhere Korrosionsbeständigkeit des Lagerzapfens resultiert.

Es hat sich gezeigt, dass durch diese Schutzschicht eine bessere Resistenz sowohl gegen den tribologisch bedingten Verschleiss als auch gegen den korrosiven Angriff des flüssigen Metalls, insbesondere des flüssigen Aluminiums oder Zinks erzielen lässt.

Eine erste bevorzugte Ausführungsform besteht darin, das Laserdispergieren als Laserverfahren zu verwenden. Hierzu wird der Hartstoff mittels Laserdispergierens in die Wolfram- oder Molybdänbasisschicht eingebracht, die vorgängig thermisch auf den Lagerzapfen aufgespritzt ist.

Bei dieser Ausführungsform hat es sich als vorteilhaft erwiesen, wenn der Anteil des Hartstoffs in der Schutzschicht mindestens 30 Volumenprozent und vorzugsweise 60 bis 85 Volumenprozent beträgt.

Bei einer zweiten bevorzugten Ausführungsform ist die Schutzschicht mittels Laserauftragschweissens unter Zusatz des Hartstoffs generiert. Beim Laserauftragsschweissen beziehungsweise beim Laser-Cladding wird in an sich bekannter Weise als Ausgangsmaterial ein Pulver verwendet, das durch die Laserenergie aufgeschmolzen und auf dem Grundwerkstoff deponiert wird. Das Pulver ist dann vorzugsweise eine Mischung aus dem Basiswerkstoff, also Wolfram oder Molybdän und dem Hartstoff. Während des Laserschweissens wird dann der Hartstoff in die metallische Binder- oder Matrixphase eingebunden.

Beim Laserauftragsschweissen hat es sich als vorteilhaft erwiesen, wenn der Anteil des Hartstoffs in der Schutzschicht mindestens 30 Volumenprozent und vorzugsweise 50 bis 70 Volumenprozent beträgt.

Es kann vorteilhaft sein die Schutzschicht auch auf dem Rollenkörper vorzusehen, um diesen gegen den Angriff durch das flüssige Metall zu schützen.

Vorzugsweise bedeckt die Schutzschicht die gesamte Mantelfläche des Lagerzapfens, damit dieser optimal geschützt ist.

Im Hinblick auf die tribologischen Eigenschaften und eine bessere Verankerung der Schutzschicht kann es vorteilhaft sein, wenn jeder Lagerzapfen mindestens eine Nut aufweist, die sich in Umfangsrichtung über den gesamten Umfang des Lagerzapfens erstreckt, und die mit der Schutzschicht aufgefüllt ist.

Durch die Erfindung wird ferner ein Verfahren vorgeschlagen zur Herstellung einer Tauchbadrolle für ein Tauchbad mit flüssigem Metall mit einem Rollenkörper, der sich entlang einer Längsachse erstreckt, sowie mit im Wesentlichen zylindrischen Lagerzapfen zum Zusammenwirken mit Lagerbuchsen zwecks Lagerung der Tauchbadrolle, wobei jeder Lagerzapfen mit einer Schutzschicht versehen wird, und wobei die Schutzschicht eine Wolfram- oder eine Molybdänbasisschicht ist, die eine Hartstoff enthält und mittels eines Laserverfahrens generiert wird.

Bei einer ersten Ausführungsform wird als Laserverfahren das Laserdispergieren verwendet. Zunächst wird die Wolfram- oder Molybdänbasisschicht thermisch auf den Lagerzapfen aufgespritzt und anschliessend wird der Hartstoff mittels Laserdispergierens in die Wolfram-oder Molybdänbasisschicht eingebracht.

Dabei hat es sich als vorteilhaft erwiesen, wenn der Anteil des Hartstoffs in der Schutzschicht mindestens 30 Volumenprozent und vorzugsweise 60 bis 85 Volumenprozent beträgt.

Bei einer zweiten bevorzugten Ausführungsform wird die Schutzschicht mittels Laserauftragschweissens unter Zusatz des Hartstoffs generiert. Dazu wird für das Laserauftragsschweissen ein pulverförmiges Ausgangsmaterial verwendet, das sowohl die metallische Binderphase - also Wolfram oder Molybdän - enthält als auch den Hartstoff.

Bei dieser Ausführungsform hat es sich in der Praxis als vorteilhaft erwiesen, wenn der Anteil des Hartstoffs in der Schutzschicht mindestens 30 Volumenprozent und vorzugsweise 50 bis 70 Volumenprozent beträgt.

Wie bereits im Zusammenhang mit der Tauchbadrolle erläutert, kann es auch bei dem Verfahren vorteilhaft sein, wenn die Schutzschicht auch auf dem Rollenkörper vorgesehen ist.

Eine weitere vorteilhafte Verfahrensführung besteht darin, dass bei jedem Lagerzapfen zumindest eine Nut vorgesehen wird, die sich in Umfangsrichtung über den gesamten Umfang des Lagerzapfens erstreckt, wobei die Nut mit der Schutzschicht aufgefüllt wird.

Weitere vorteilhafte Massnahmen und bevorzugte Ausgestaltungen der Erfindung ergeben sich aus den abhängigen Ansprüchen.

Im Folgenden wird die Erfindung sowohl in apparativer als auch in Verfahrenstechnischer Hinsicht anhand von Ausführungsbeispielen und anhand der Zeichnung näher erläutert. In der schematischen Zeichnung zeigen teilweise im Schnitt:
- Fig. 1: einen schematische Darstellung eines Tauchbads zum Beschichten mit einem flüssigen Metall,
- Fig. 2: eine schematische Darstellung eines Ausführungsbeispiels einer erfindungsgemässen Tauchbadrolle, wobei die Lagerzapfen im Schnitt dargestellt sind, und
- Fig. 3: eine Schnittdarstellung eines Lagerzapfens für eine Variante des Ausführungsbeispiels aus Fig. 2.

Fig. 1 zeigt in einer schematischen Darstellung ein Tauchbad zur Beschichtung von Metallbändern, speziell Stahlbändern, mit einem Metall. Im Folgenden wird auf das für die Praxis besonders wichtige Ausführungsbeispiel Bezug genommen, dass die Beschichtung mit Aluminium erfolgen soll. Es versteht sich jedoch, dass die Erfindung nicht auf solche Anwendungen beschränkt ist, sondern auch für andere Metalle oder Legierungen Verwendung finden kann, beispielsweise für das Verzinken.

Das Tauchbad umfasst einen Behälter 10, der bis zu einer Niveaulinie 11 mit flüssigem Aluminium 12 gefüllt ist. In dem Behälter sind eine Bodenrolle 1a sowie zwei Stabilisatorrollen 1 b vorgesehen. Da die Erfindung sowohl für die Bodenrolle 1a als auch für die Stabilisatorrollen 1 b Verwendung finden kann, wird im Folgenden als Oberbegriff auch "Tauchbadrolle 1" verwendet, womit dann die Bodenrolle 1a und/oder die Stabilisatorrolle 1 b, bzw. die Stabilisatorrollen 1 b gemeint sind.

Das zu beschichtende Metallband 13, insbesondere ein Stahlband, wird durch das flüssige Aluminium 12 bewegt, umläuft die Bodenrolle 1a, wo es umgelenkt wird, passiert die beiden Stabilisatorrollen 1 b und verlässt dann den Behälter 10. Die Bewegung des Metallbands 13 ist in Fig. 1 durch die beiden Pfeile ohne Bezugszeichen dargestellt.

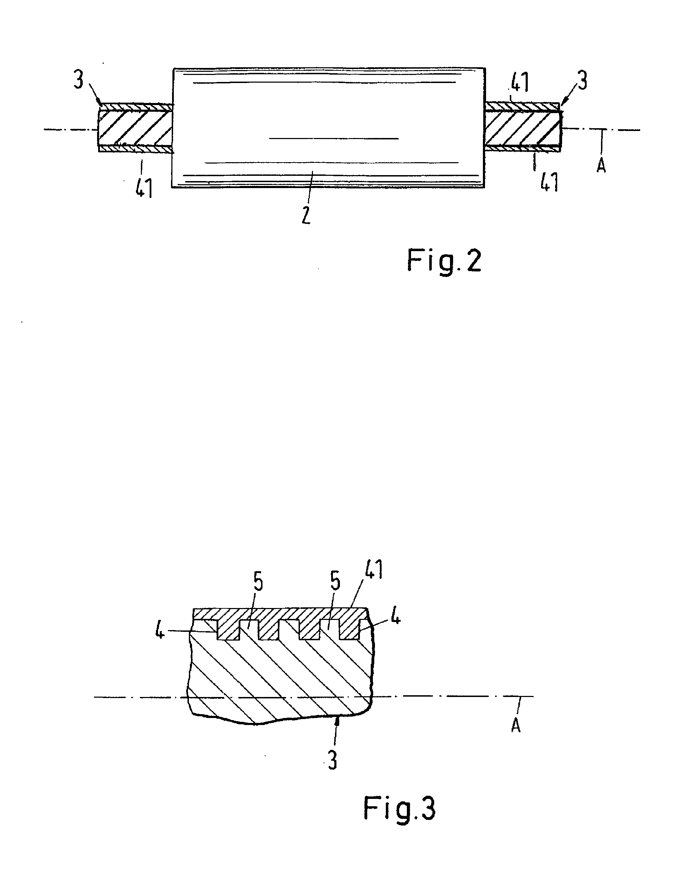

Fig. 2 zeigt in einer schematischen Darstellung ein Ausführungsbeispiel einer erfindungsgemässen Tauchbadrolle 1, die als Bodenrolle 1a oder als Stabilisatorrolle 1 b bzw. als Korrekturrolle ausgestaltet sein kann. Die Tauchbadrolle 1 hat eine allgemein zylindrische Gestalt mit einem Rollenkörper 2 der sich entlang einer Längsachse A erstreckt. An den beiden Grundflächen des zylindrischen Rollenkörpers 2 ist jeweils ein im Wesentlichen zylindrischer Lagerzapfen 3 vorgesehen, der sich jeweils konzentrisch zum Rollenkörper 2 in Richtung der Längsachse A erstreckt. Die Lagerzapfen wirken zusammen mit nicht dargestellten Lagerbuchsen, sodass die Tauchbadrolle 1 in dem Behälter 10 drehbar gelagert werden kann. Zum besseren Verständnis sind in Fig. 2 die Lagerzapfen 3 im Schnitt dargestellt.

Der Lagerzapfen 3 kann entweder als massiver Zapfen ausgebildet sein, der einstückig mit dem Rollenkörper hergestellt ist, oder drehfest mit dem Rollenkörper 2 verbunden ist, beispielsweise durch Schweissen, oder der Lagerzapfen 3 umfasst einen zylindrischen Kern, auf den eine Buchse drehfest aufgesetzt ist.

Das Grundmaterial aus dem der Rollenkörper 2 bzw. die Lagerzapfen 3 bestehen, ist irgendein Material, was aus dem Stand der Technik für Tauchbadrollen hinreichen bekannt ist, beispielsweise der Stahl 1 00Cr6 für Lagerzapfen oder eine Eisengusslegierung für Rollenkörper.

Erfindungsgemäss ist an jedem Lagerzapfen 3 eine Schutzschicht 41 vorgesehen. Die Schutzschicht 41 ist auf der Mantelfläche des Lagerzapfens 3 vorgesehen und kann - wie in Fig. 2 dargestellt, die gesamte Mantelfläche des Lagerzapfens 3 bedecken. Alternativ und je nach Anwendungsfall ist es auch möglich, dass die Schutzschicht 41 nur einen Teil der Mantelfläche des Lagerzapfens 3 bedeckt. Eine weitere Variante besteht darin, dass auch die dem Rollenkörper 2 abgewandte Stirnfläche des Lagerzapfens 3 mit der Schutzschicht 41 bedeckt ist.

Die Schutzschicht 41 ist eine Wolfram- oder Molybdänbasisschicht, in welche der Hartstoff eingelagert ist.

Als Hartstoff eignen sich alle an sich bekannten Hartstoffe wie beispielsweise Boride, Nitride (kubisch kristallines Bornitrid, Titannitrid, Siliciumnitrid, ...), Carbide (Siliciumcarbid, Borcarbid, Wolframcarbid, Vanadiumcarbid, Titancarbid, Molydäncarbid, Tantalcarbid, ...) oder Oxide (Aluminiumoxid, Zirconiumdioxid, ...).

In Verbindung mit den Basiswekstoffen Wolfram oder Molybdän eignen sich insbesondere auch Wolframcarbid (WC, W₂C) oder Molybdäncarbid (Mo₂C, MoC) als Hartstoffe.

Zur Herstellung der erfindungsgemässen Tauchbadrolle eignen sich insbesondere zwei an sich bekannte Laserverfahren. Bei einer ersten Ausführungsform erfolgt die Herstellung der Schutzschicht 41 durch Laserdispergieren. Zunächst wird in an sich bekannter Weise der Rollenkörper 2 mit den Lagerzapfen 3 hergestellt. Anschliessend wird in einem thermischen Spritzprozess, vorzugsweise Plasmaspritzen, Flammspritzen oder Lichtbogenspritzen, eine Basisschicht aus Molybdän oder Wolfram aufgespritzt. Anschliessend wird dann mittels Laserdispergierens der gewünschte Hartstoff in die Basisschicht eingebracht. Die metallische Binderphase aus Wolfram oder Molybdän dient dabei zur Einbettung der Hartstoffe. Es versteht sich, dass natürlich auch Mischungen von Hartstoffen in der Schutzschicht 41 vorgesehen sein können. Es hat sich beim Laserdispergieren als vorteilhaft erwiesen, wenn der Anteil des Hartstoffs in der Schutzschicht mindestens 30 Volumenprozent und vorzugsweise 60 bis 85 Volumenprozent beträgt.

Bei einer zweiten vorteilhaften Ausführungsform erfolgt die Herstellung der Schutzschicht 41 mittels Laserauftragsschweissens bzw. mittels Laser-Claddings. Hierzu wird ein pulverförmiges Ausgangsmaterial, das sowohl das Wolfram oder das Molybdän als auch den Hartstoff oder die Hartstoffe enthält, in an sich bekannter Weise durch Laserschweissen auf den Zapfen 3 aufgetragen, um so die Schutzschicht 41 zu erzeugen. Anstelle eines einzigen Pulvers als Ausgangsmaterial können auch zwei Pulver verwendet werden, die dann vorzugsweise kodeponiert, also gleichzeitig im Laserprozess aufgetragen werden. Bei dieser Ausführungsform hat es sich in der Praxis als vorteilhaft erwiesen, wenn der Anteil des Hartstoffs in der Schutzschicht mindestens 30 Volumenprozent und vorzugsweise 50 bis 70 Volumenprozent beträgt.

Durch diese Laserverfahren lässt sich eine vorteilhafte Gussstruktur oder zumindest eine gussähnliche Struktur erzeugen, in welche die Hartstoffe eingebettet sind.

Optional ist es möglich, die Schutzschicht 41 in sinngemäss gleicher Weise auf auf der äusseren Oberfläche des Rollenkörpers 2 vorzusehen, sodass zumindest seine Mantelfläche ganz oder teilweise von der Schutzschicht 41 bedeckt ist.

Es versteht sich, dass die Schutzschicht 41 auf den Lagerzapfen 3 bzw. auf dem Rollenkörper 2 anschliessend einer End- oder Fertigbearbeitung wie beispielsweise Schleifen, Polieren, Versiegeln unterzogen werden kann. Die Dicke der Schutzschicht 41 beträgt nach der optionalen Fertigbearbeitung vorzugsweise zwischen 500 Mikrometern und einigen Millimetern und besonders bevorzugt etwa ein Millimeter.

Eine Variante für das in Fig. 2 dargestellte Ausführungsbeispiel ist in Fig. 3 veranschaulicht, wobei in Fig. 3 nur der Lagerzapfen 3 dargestellt ist. Bei dieser Variante ist an dem Lagerzapfen 3 mindestens eine Nut 4 vorgesehen, die sich entlang des gesamten Umfangs über die Mantelfläche des Lagerzapfen 3 erstreckt und so eine ringförmige Vertiefung in dem Lagerzapfen 3 bildet. Bei der hier gezeigten Variante sind es vier Nuten 4, die jeweils durch Stege 5 voneinander getrennt sind. Jede der Nuten 4 ist mit der Schutzschicht 41 aufgefüllt.

Die Nuten 4 können vor dem Aufbringen der Schutzschicht 41 in einem materialabtragenden Bearbeitungsschritt, z.B. durch Fräsen hergestellt werden.

In der Praxis hat es sich bewährt, wenn jede Nut 4 eine Tiefe von mindestens fünfzig Mikrometer und besonders bevorzugt eine Tiefe von 100 bis 200 Mikrometer aufweist. Die Nuten 4 werden vollständig mit der Schutzschicht aufgefüllt 41. Ferner ist es bevorzugt, wenn für jeden Lagerzapfen 3 die Stege 5 mindestens 30 Prozent der Oberfläche des Lagerzapfens 3 bilden, die Stege 5 jeweils eine Breite von 3mm bis 15mm aufweisen und jede Nut 4 eine Breite von 3mm bis 20mm aufweist.

Wie in Fig. 3 gezeigt, können im thermischen Spritzprozess auch die Stege mit der Schutzbeschichtung 41 versehen werden, sodass die Schutzschicht 41 nicht nur die Nuten 4 auffüllt sondern auch die Oberfläche der Stege 5 schützt. Primäre Aufgabe der Stege 5 ist es, dem Lagerzapfen 3 die nötige Stabilität zu verleihen.

Nach dem thermischen Spritzprozess kann die Beschichtung des Lagerzapfens 3 durch Schleifen bzw. Polieren noch egalisiert bzw. nachbearbeitet werden, sodass der Lagerzapfen 3 insgesamt eine glatte, polierte Oberfläche aufweist. Optional kann nach dem Schleifen noch ein an sich bekannter Versieglungsprozess durchgeführt werden. Dazu wird eine chromhaltige Glasur auf den Zapfen aufgetragen und anschliessend eingebrannt.

Mit der erfindungsgemässen Tauchbadrolle lassen sich im Aluminiumbad, das typischerweise eine Temperatur von 680°C aufweist, Standzeiten von bis zu 15 Tagen und mehr erzielen, wobei gleichzeitig ein wesentlich ruhigerer Lauf der Tauchbadrollen zu beobachten ist als bei Tauchbadrollen, die aus dem Stand der Technik bekannt sind.

Je nach Anwendungsfall kann es vorteilhaft sein, auch den Rollenkörper 3 in sinngemäss gleicher Weise wie die Lagerzapfen 3 mit Umfangsnuten zu versehen, die mit einer Schutzschicht in einem thermischen Spritzprozess aufgefüllt werden.

## Patentansprüche

1. Tauchbadrolle für ein Tauchbad mit flüssigem Metall mit einem Rollenkörper (2), der sich entlang einer Längsachse (A) erstreckt, sowie mit einem im Wesentlichen zylindrischen Lagerzapfen (3) zum Zusammenwirken mit Lagerbuchsen zwecks Lagerung der Tauchbadrolle (1,1 a,1 b), wobei jeder Lagerzapfen (3) eine Schutzschicht (41) aufweist, **dadurch gekennzeichnet, dass** die Schutzschicht eine Wolfram- oder eine Molybdänbasisschicht ist, die einen Hartstoff enthält und mittels eines Laserverfahrens generiert ist.

2. Tauchbadrolle nach Anspruch 1, bei welchem der Hartstoff mittels Laserdispergierens in die Wolfram- oder Molybdänbasisschicht eingebracht ist, die vorgängig thermisch auf den Lagerzapfen (3) aufgespritzt ist.

3. Tauchbadrolle nach Anspruch 2 wobei der Anteil des Hartstoffs in der Schutzschicht (41) mindestens 30 Volumenprozent und vorzugsweise 60 bis 85 Volumenprozent beträgt.

4. Tauchbadrolle nach Anspruch 1, bei welchem die Schutzschicht (41) mittels Laserauftragschweissens unter Zusatz des Hartstoffs generiert ist.

5. Tauchbadrolle nach Anspruch 4, wobei der Anteil des Hartstoffs in der Schutzschicht (41) mindestens 30 Volumenprozent und vorzugsweise 50 bis 70 Volumenprozent beträgt.

6. Tauchbadrolle nach einem der vorangehenden Ansprüche wobei die Schutzschicht (41) auch auf dem Rollenkörper (2) vorgesehen ist.

7. Tauchbadrolle nach einem der vorangehenden Ansprüche, bei welchem die Schutzschicht (41) die gesamte Mantelfläche des Lagerzapfens (3) bedeckt.

8. Tauchbadrolle nach einem der vorangehenden Ansprüche, wobei jeder Lagerzapfen (3) mindestens eine Nut (4) aufweist, die sich in Umfangsrichtung über den gesamten Umfang des Lagerzapfens (3) erstreckt, und die mit der Schutzschicht (41) aufgefüllt ist.

9. Verfahren zur Herstellung einer Tauchbadrolle für ein Tauchbad mit flüssigem Metall mit einem Rollenkörper (2), der sich entlang einer Längsachse (A) erstreckt, sowie mit im Wesentlichen zylindrischen Lagerzapfen (3) zum Zusammenwirken mit Lagerbuchsen zwecks Lagerung der Tauchbadrolle (1,1a,1 b), wobei jeder Lagerzapfen (3) mit einer Schutzschicht (41) versehen wird, **dadurch gekennzeichnet, dass** die Schutzschicht (41) eine Wolfram- oder eine Molybdänbasisschicht ist, die eine Hartstoff enthält und mittels eines Laserverfahrens generiert wird.

10. Verfahren nach Anspruch 9, bei welchem zunächst die Wolfram- oder Molybdänbasisschicht thermisch auf den Lagerzapfen (3) aufgespritzt wird und anschliessend der Hartstoff mittels Laserdispergierens in die Wolfram-oder Molybdänbasisschicht eingebracht wird.

11. Verfahren nach Anspruch 10, wobei der Anteil des Hartstoffs in der Schutzschicht (41) mindestens 30 Volumenprozent und vorzugsweise 60 bis 85 Volumenprozent beträgt.

12. Verfahren nach Anspruch 9, bei welchem die Schutzschicht (41) mittels Laserauftragschweissens unter Zusatz des Hartstoffs generiert wird.

13. Verfahren nach Anspruch 12, wobei der Anteil des Hartstoffs in der Schutzschicht (41) mindestens 30 Volumenprozent und vorzugsweise 50 bis 70 Volumenprozent beträgt.

14. Verfahren nach einem der Ansprüche 9-13, bei welchem die Schutzschicht (41) auch auf dem Rollenkörper (2) vorgesehen ist.

15. Verfahren nach einem der Ansprüche 9-14, wobei jedem Lagerzapfen (3) zumindest eine Nut (4) vorgesehen wird, die sich in Umfangsrichtung über den gesamten Umfang des Lagerzapfens (3) erstreckt, wobei die Nut (4) mit der Schutzschicht (41) aufgefüllt wird.

## Claims

1. An immersion bath roller for an immersion bath with liquid metal, including a roller body (2), which extends along a longitudinal axis (A) as well as including a substantially cylindrical bearing spigot (3) for cooperating with bearing bushes for the purpose of supporting the immersion bath roller (1, 1a, 1b), wherein each bearing spigot (3) has a protective layer (41), **characterized in that** the protective layer is a tungsten or a molybdenum base layer which includes a hard material and which is generated by means of a laser process.

2. An immersion bath roller in accordance with claim 1, wherein the hard material is introduced into the tungsten or molybdenum base layer by means of laser dispersing which tungsten or molybdenum base layer is previously thermally sprayed onto the bearing spigot (3).

3. An immersion bath roller in accordance with claim 2, wherein the portion of the hard material in the protective layer (41) amounts to at least 30 volume percent and preferably amounts to 60 to 85 volume percent.

4. An immersion bath roller in accordance with claim 1, wherein the protective layer (41) is generated by means of laser deposition welding while adding the hard material.

5. An immersion bath roller in accordance with claim 4, wherein the portion of the hard material in the protective layer (41) amounts to at least 30 volume percent and preferably amounts to 50 to 70 volume percent.

6. An immersion bath roller in accordance with any one of the preceding claims, wherein the protective layer (41) is also provided at the roller body (2).

7. An immersion bath roller in accordance with any one of the preceding claims, wherein the protective layer (41) covers the overall jacket surface of the bearing spigot (3).

8. An immersion bath roller in accordance with any one of the preceding claims, wherein each bearing spigot (3) has at least one groove (4) which extends in the circumferential direction over the entire circumference of the bearing spigot (3) and which is filled with the protective layer (41).

9. A method for the manufacture of an immersion bath roller for an immersion bath with liquid metal, including a roller body (2) which extends along a longitudinal axis (A), as well as including a substantially cylindrical bearing spigot (3) for cooperating with bearing bushes for the purpose of supporting the immersion bath roller (1, 1a, 1b), wherein each bearing spigot (3) is provided with a protective layer (41), **characterized in that** the protective layer (41) is a tungsten or a molybdenum base layer which includes a hard material and which is generated by means of a laser process.

10. A method in accordance with claim 9, wherein the tungsten or molybdenum base layer is first thermally sprayed onto the bearing spigot (3) and the hard material is subsequently introduced into the tungsten or molybdenum base layer by means of laser dispersing.

11. A method in accordance with claim 10, wherein the portion of the hard material in the protective layer (41) amounts to at least 30 volume percent and preferably amounts to 60 to 85 volume percent.

12. A method in accordance with claim 9, wherein the protective layer (41) is generated by means of a laser deposition welding while adding the hard material.

13. A method in accordance with claim 12, wherein the portion of the hard material in the protective layer (41) amounts to at least 30 volume percent and preferably amounts to 50 to 70 volume percent.

14. A method in accordance with any one of the claims 9 - 13, wherein the protective layer (41) is also provided at the roller body (2).

15. A method in accordance with any one of the claims 9 - 14, wherein each bearing spigot (3) is provided with at least one groove (4) which extends in the circumferential direction over the entire circumference of the bearing spigot (3), wherein the groove (4) is filled with the protective layer (41).

## Revendications

1. Rouleau de bain d'immersion pour un bain d'immersion contenant du métal liquide, avec un corps de rouleau (2) qui s'étend le long d'un axe longitudinal (A) ainsi qu'avec un tourillon (3) essentiellement cylindrique pour coopérer avec des coussinets de palier pour supporter le rouleau de bain d'immersion (1, 1a, 1b), chaque tourillon (3) comportant une couche protectrice (41), **caractérisé en ce que** la couche protectrice est une couche de base de tungstène ou de molybdène qui comporte une matière dure et est engendrée par un procédé laser.

2. Rouleau de bain d'immersion selon la revendication 1, **caractérisé en ce que** la matière dure est introduite par dispersion au laser, dans la couche de base de tungstène ou de molybdène préalablement thermiquement appliquée sur le tourillon (3) par projection.

3. Rouleau de bain d'immersion selon la revendication 2, **caractérisé en ce que** la teneur en matière dure dans la couche protectrice (41) est au moins 30 % en volume, et de préférence 60 à 85 % en volume.

4. Rouleau de bain d'immersion selon la revendication 1, **caractérisé en ce que** la couche protectrice (41) est engendrée par soudure à rechargement au laser avec apport de la matière dure.

5. Rouleau de bain d'immersion selon la revendication 4, **caractérisé en ce que** la teneur en matière dure dans la couche protectrice (41) est au moins 30 % en volume, et de préférence 50 à 70 % en volume.

6. Rouleau de bain d'immersion selon l'une quelconque des revendications précédentes, **caractérisé en ce que** la couche protectrice (41) est également prévue sur le corps de rouleau (2).

7. Rouleau de bain d'immersion selon l'une quelconque des revendications précédentes, **caractérisé en ce que** la couche protectrice (41) recouvre la surface enveloppe entière du tourillon (3).

8. Rouleau de bain d'immersion selon l'une quelconque des revendications précédentes, **caractérisé en ce que** chaque tourillon (3) comporte une rainure (4) qui s'étend dans le sens de la circonférence sur le pourtour complet du tourillon (3) et qui est remplie de la couche protectrice (41).

9. Procédé de fabrication d'un rouleau de bain d'immersion pour un bain d'immersion contenant du métal liquide, avec un corps de rouleau (2) qui s'étend le long d'un axe longitudinal (A) ainsi qu'avec des tourillons (3) essentiellement cylindriques pour coopérer avec des coussinets de palier pour supporter le rouleau de bain d'immersion (1, 1a, 1b), chaque tourillon (3) comportant une couche protectrice (41), **caractérisé en ce que** la couche protectrice est une couche de base de tungstène ou de molybdène qui comporte une matière dure et est engendrée par un procédé laser.

10. Procédé selon la revendication 9, selon lequel la couche de base de tungstène ou de molybdène est préalablement thermiquement appliquée sur le tourillon (3) par projection et que, ensuite, la matière dure est introduite dans la couche de base de tungstène ou de molybdène par dispersion au laser.

11. Procédé selon la revendication 10, **caractérisé en ce que** la teneur en matière dure dans la couche protectrice (41) est au moins 30 % en volume, et de préférence 60 à 85 % en volume.

12. Procédé selon la revendication 9, **caractérisé en ce que** la couche protectrice (41) est engendrée par soudure à rechargement au laser avec apport de la matière dure.

13. Procédé selon la revendication 12, **caractérisé en ce que** la teneur en matière dure dans la couche protectrice (41) est au moins 30 % en volume, et de préférence 50 à 70 % en volume.

14. Procédé selon l'une quelconque des revendications 9 à 13, **caractérisé en ce que** la couche protectrice (41) est également prévue sur le corps de rouleau (2).

15. Procédé selon l'une quelconque des revendications 9 à 14, **caractérisé en ce que** chaque tourillon (3) comporte une rainure (4) qui s'étend dans le sens de la circonférence sur le pourtour complet du tourillon (3), la rainure (4) étant remplie avec la couche protectrice (41).
